# EUROPEAN PATENT APPLICATION

(11) **EP 2 693 046 A2**
(43) Date of publication of application: **05.02.2014**
(21) Application number: 13386022.1
(22) Date of filing: 09.07.2013
(51) Int. Cl.: F03D 3/02, F03D 3/04

(54) **Method of constructing an array of vertical-axis wind turbines**

(30) Priority: 30.07.2012 GR 20120100404
(71) Applicant: Siammas, Andreas, 4153 Limassol (CY)
(72) Inventor: Siammas, Andreas, 4153 Limassol (CY)

(57) **Abstract**

The present invention refers to a method of constructing an array of vertical axis wind turbines. It consists of some vertical axis padding wheels (9), disks (3) of horizontal separation of the wind and wind direction utility blades (8) for clockwise and anticlockwise rotation. Specifically, the creation is consisted of a central circular tower vertical to the surface of the ground. On this tower is placed a row of vertical axis padding wheels (9). Amongst the padding wheels (9) are placed circular disks (3) of larger diameter than the padding wheels (9) and widened in the center. In the perimeter of these disks are adjusted wind direction utility blades (8) which guide the wind to the center of the creation, where the padding wheels (9) are. The direction utility blades (9) are used to the settlement of the rotation direction of the padding wheels (9). The combination of the disks (3) and the utility blades (8) to their perimeter can help the creation to utilize the wind that it catches, by directing it to the padding wheels. Because of the fact that the speed of the rotation of each padding wheel is depended on the wind velocity, the electrical generators are connected to the rotation axis one by one. So when the wind velocity increases more generators are connected and vise versa. In this way it is achieved the stable speed of the rotation and the full utilize of the wind.

## Description

The invention refers to a method of constructing an array of wind-powered electrical generators with vertical axis that can be placed in wind farms or as autonomous unit of electric energy production, either as an independent creation or as part of other building.

The rapid global development of the last years has brought a sudden, giant increase to the demands of electric energy. As a consequence, it has been seen a quick reduce of the energy supplies of the conventional energy resources, such as natural gas and petrol. For this purpose and for environment protection purposes, because of the wastes of the conventional energy resources, in recent years there have been done global attempts to reduce the dependence of the global economy from the conventional energy resources and shift to the inexhaustible energy resources. Technology of exploitation of the wind energy possesses a significant position in this attempt. Traditional windmills were used since the ancient years to obtain water, milling of the cereals and for many other usages. In the contemporary ages, technology leverages the wind energy by using enormous wind power plant that convert the wind energy into electrical.

There have been developed two types of modern wind turbines. The horizontal axis wind turbines, when the rotation axis of the fan is horizontal in relation to the ground and that with vertical axis, when the main rotor shaft arranged vertically. Horizontal axis wind turbines have dominated in the commerce, since now because of one extremely significant benefit in correlation with the vertical axis wind turbines. Generally, they have better efficiency. However, the vertical axis wind turbines have two very important advantages. They do not need a braking mechanism in high velocity of the wind and they do not need to be oriented to the wind direction, each time. The above two benefits give to the vertical axis wind turbines facility and lower creation cost. They are also safer because there is no danger for a blade to break.

The structure shown in the present invention productively combines the benefits of both types of wind turbines. Basically, the construction is consisted of a central circular tower vertical to the ground surface. On the tower are placed multiple paddle wheels with vertical axis. Between the paddle wheels are placed circular disks of bigger diameter than the paddle wheels and broadened in the center. In the perimeter of these disks are fitted utility blades that guide the wind to the center of the creation, where the paddle wheels are placed. These utility blades are also used to determine the direction of the paddle wheel rotation. The whole structure catches the wind from any direction, it separates it in levels and it directs it on the paddle wheels in such a way that they rotate, independently with one another, clockwise or anticlockwise alternately. Each padding wheel is rotating, with speed according to wind's tension, independently from the others and can transmit its movement, through a gearbox or other clutch system, in more than one electric generator. These generators can be automatically connected to the paddle wheel one by one as the volume of the wind increases and at the same time they disconnect when the volume of the wind reduces. In this way, the paddle wheels can rotate even when the tension of the wind is not enough to rotate them with full cargo. Moreover, as the wind tension grows, the increase of the cargo drops the speed of the rotation but increases the producing electric energy. Consequently, we can handle low-tension winds and utilize the entire power of strong wind.

That construction presents much more efficiency compared with normal vertical - axis wind turbine, since the entire volume of air passing through the structure is being exploited. At the same time, the arrangement of the disks with the utility blades, maximize the exploitation of the wind energy by gathering it on the padding wheels. So it has the skills to produce electrical energy even if the power of the wind is low and while the wind gets stronger explodes all the power adding automatic more generators. The invention presents two significant advantages due to already known horizontal - axis wind turbines. A breaking mechanism is not needed at strong wind. Also it does not need orientation system to turn the padding wheels each time to the wind direction since it can catches the wind from any direction. In that way we can achieve a cheaper and safer construction of an array of wind turbines with high efficiency, which can be used in wind farms or as autonomous unit of electric energy production either as an independent construction or as a part of another building.

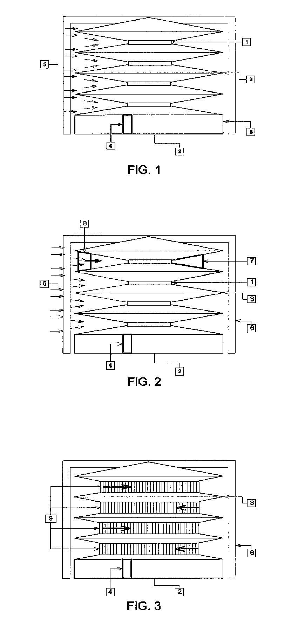

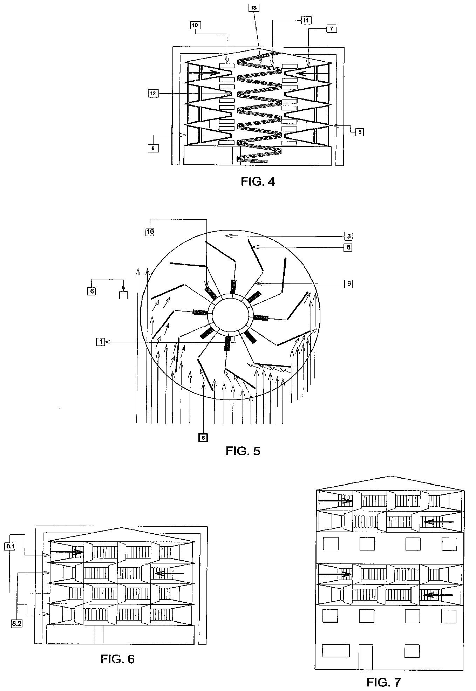

In **figure 1** is demonstrated the central tower (1) on the base (2) of the creation and the propping pillars (6) of the creation in case of large diameter of the disks. They are also presented the widened in the center disks (3) that are placed on the tower. Between the two disks there is the necessary empty space in which the padding wheels will be placed. It is also shown the entrance (4) in the building of the central tower. The arrows (5) on the left side of the building show the direction that the wind will follow when it will fell on the circular disks (3). In **figure 2** has been added one blade (7) of the padding wheel in the empty space between two disks (3) and a wind direction utility blade (8) that guides the wind to the center of the creation. In **figure 3** we can see the completed padding wheels (9) placed on the central tower, between the disks (3). In **figure 4** we can see a vertical section of the creation. The blades of the padding wheels (7), the rings with ball bearing that props the padding wheels and the wind direction utility blades (8) are shown. The generators (10) are placed in the disks (3). In the same figure we can see the position of the lift and staircase from where we can have access to all the levels of the creation. Respectively, **figure 5** presents a horizontal section that shows the central tower (1), the generators (10) of the electricity, the padding wheels (9), a central disk (3), the wind direction utility blades (8) and the arrows (5) that show the direction of the wind. Because of the slope that the wind direction utility blades (8) have in relation to the disk perimeter, the wind is directed to the blades of the padding wheels from the one side forcing it to rotate to specific direction while in the opposite side of the padding wheels they banish it so as not to create resistance to the rotation of the padding wheel. **Figure 6** presents a completed array of wind turbines. Clockwise blades (8.1) of wind direction and anticlockwise blades (8.2) of wind direction are distinguished. In **figure 7** is shown a sample of wind turbines array embodying in other building.

Basically, the creation is a system that combines multiple vertical axis padding wheels between horizontal disks that cause separation of the wind and blades of clockwise and anticlockwise direction of the wind course. A system with cylindrical shape is created, with rays and height corresponding to the desired power of the system. In the center of the cylinder is created a trunk (figure 1) that constitutes the base of the system prop. It is placed a lift and stairway (figure 4) in it, for access to different levels of the whirlwinds system.

On the basic trunk are placed the disks of horizontal guidance of the wind course (figures 1 and 2) alternately with the padding wheels (figure 3). The diameter of the disks of horizontal guidance of the wind is larger than the padding wheels initiating with the depth close to the trunk able to leave installation space for the electrical generators and conclude to the outside line in full convergence recess. In the perimeter between the two horizontal disks are placed the utility blades of clockwise or anticlockwise wind course (figure 2, 4 and 5) that direct the wind to the padding wheels, which are paced amongst the disks. The direction utility blades have two more functions. Firstly, from the one side of the creation they guide the wind to the padding wheel forcing it to rotate with specific course and secondly in the opposite side of the creation they banish it. In this way whirlwinds are avoided so as not to resist to the padding wheel rotation. The whole system utilizes the wind from any direction of 360 degrees. It distinguishes it with the help of the disks in levels and simultaneously, with the wind direction utility blades it guides it on the padding wheels, forcing it in clockwise or anticlockwise rotation. The alternate movement of one padding wheel on the left and one of the right, helps the stable function of the system with neutralization of the moments that are created. It is important to remember the double role of the wind direction utility blade. They firstly encircle the wind to the padding wheel and secondly they banish the wind to the opposite side of the padding wheel. In this way they help to avoid wind vortex that brake the padding wheel

Each padding wheel is rotating with speed proportioned to the power of the wind, independently from the rest and it can transmit its movement, through a gearbox or other clutch system, in more than one generators. These generators can be automatically combined to the padding wheel, one by one, as the wind volume grows and respectively, is disconnected when the wind volume reduces. In this way, the padding wheels can rotate even when wind volume is not enough to rotate the whole cargo. On the other hand, as the volume of the wind increases, the increase of the cargo drops the rotation speed. Consequently, we can exploit low-resistance winds and utilize all the power of strong wind.

## Claims

1. Method of creating an array of vertical axis wind turbines that can be placed in wind farms for commercial electricity production or as autonomous electric energy production unit. Either as an independent creation or as a part of other building. The whole creation takes the wind from any direction, it separates it in levels and guides it with the help of direction utility blades (8), on the padding wheels (9) in such a way that they rotate with the highest possible speed, independently with one another, clockwise and anticlockwise alternately. This is achieved by placing a number of independent vertical axis padding wheels (9) on the central circular tower (1), amongst the horizontal, specifically modified disks (3) of larger diameter from the padding wheels (9). In the perimeter of the disks (3), wind direction utility blades (8) are placed in such a way that the wind the creation catches, from the one side is directed to the padding wheels (9), whereas on the opposite side of the creation it is banished. In this way are avoided wind vortexes that would slow down the padding wheel (9) rotation. Additionally, the direction utility blades (8) set the rotation direction of each padding wheel (9), alternately clockwise or anticlockwise according to their slope to the perimeter of the disk (3), so as the moments that are created will neutralize each other.

2. Method of creating an array of vertical axis wind turbines that according to pretension 1, number of vertical axis independent padding wheels (9) are placed amongst specifically modified disks (3) in the perimeter of which, have been placed wind direction utility blades (8). Each padding wheel (9) rotates, with speed according to wind's velocity, independently from the rest and can transmit its movement through a gearbox or other clutch system, in more than one generator. These generators can be automatically connected to the padding wheel (9) one by one, while the wind resistance grows and accordingly, they disconnect when the wind resistance is reduced. In this way the padding wheels (9) can rotate even when the wind resistance is not enough to rotate them with full cargo. On the other hand, as the wind velocity increases, the increase of the cargo, meaning the number of the connected generators, drops the rotation speed. Consequently, we can exploit low-velocity winds and utilize all the power of strong winds.
